# EUROPÄISCHE PATENTSCHRIFT

(11) **EP 0 860 954 B1**
(45) Veröffentlichungstag und Bekanntmachung des Hinweises auf die Patenterteilung: **26.01.2005**
(21) Anmeldenummer: 98440035.8
(22) Anmeldetag: 23.02.1998
(51) Int. Cl.: H04B 7/26

(54) **Verfahren zur Weitergabe von Informationen zwischen beweglichen Körpern und Kommunikationseinrichtung zur Durchführung des Verfahrens**
Method pf transfering information between moving objects and communication device using the method
Méthode pour le transfert d'information entre des objets en mouvement et dispositif de communication utilisant ladite méthode

(30) Priorität: 25.02.1997 DE 19707537
(43) Veröffentlichungstag der Anmeldung: 26.08.1998
(60) Teilanmeldung: 04291951.4
(73) Patentinhaber: ALCATEL, 75008 Paris (FR)
(72) Erfinder: Beier, Wolfgang, 71263 Weil der Stadt (DE); Idler, Horst, 70439 Stuttgart (DE)
(74) Vertreter: Rausch, Gabriele, Dr.

(56) Entgegenhaltungen:
- DE-A- 3 337 648
- DE-A- 4 034 681
- DE-A- 19 524 949
- DE-A- 19 535 021
- DE-A- 19 608 846
- DE-A- 19 726 956
- FR-A- 2 736 789
- JP-A- 6 036 185
- US-A- 4 706 086
- US-A- 5 355 511

## Beschreibung

Die Erfindung betrifft ein Verfahren zur Weitergabe von Informationen zwischen beweglichen Körpern gemäß dem Oberbegriff des Patentanspruchs 1 und eine Kommunikationseinrichtung zur Durchführung des Verfahrens gemäß dem Oberbegriff des Anspruchs 4.

Bekannt sind Kommunikationssysteme, bei denen Informationen vermittels eines entsprechend modulierten Funktelegramms ausgehend von einem festen oder mobilen Sender an einen bestimmten Empfänger übermittelt werden. Für viele Anwendungen reicht diese bilaterale Kommunikation vollkommen aus. Jedoch gibt es einen zunehmenden Bedarf für multilateralen Informationsaustausch zwischen beweglichen Körpern. Unter bewegliche Körper sind hier jegliche relativ zueinander ortsveränderliche Körper im weitesten Sinne zu verstehen, beispielsweise auch führerlose Transportsysteme, die mit einer eigenen Intelligenz ausgerüstet sind und ihre Bewegungen untereinander koordinieren. Im Folgenden beziehen sich die Betrachtungen jedoch vorrangig auf Fahrzeuge des Straßen-, Schienen- und Luftverkehrs.

Die JP 6036185 A und die DE 19608846 Al offenbaren jeweils ein Verfahren zur Weitergabe von Informationen zwischen beweglichen Körpern. Dabei werden die Informationen jeweils an ein Zielobjekt, d.h. einen bestimmten beweglichen Körper oder eine ortsfeste Basisstation, die sich außerhalb einer Funkreichweite befinden, weitergeleitet. Das Weiterleiten erfolgt über eine Zwischenvermittlung durch weitere bewegliche Körper.

Der Erfindung liegt die Aufgabe zugrunde, ein Verfahren und eine Kommunikationseinrichtung anzugeben, durch die eine Information sehr schnell an sehr viele bewegliche Körper, insbesondere Fahrzeuge weitergegeben werden kann.

Erfindungsgemäß wird die Aufgabe durch die kennzeichnenden Merkmale der Ansprüche 1 bzw. 4 gelöst. Die Informationsweitergabe beruht dabei auf die kaskadenartige Ausbreitung eines Funktelegramms, wobei die Kommunikationseinrichtung jedes Fahrzeugs quasi als Relaisstation dient. Das ursprüngliche Funktelegramm, das zur Weiterleitung bestimmt ist, kann sowohl von einem ortsfesten Sender, als auch von einem Fahrzeug generiert werden. Zur Beendigung der Informationsweitergabe enthält das Funktelegramm Limitparameter. Ein solcher Limitparameter kann eine vorgegebene Verbreitungszeit, ein räumliches Verbreitungsgebiet, in dem die betreffende Information interessiert, oder auch eine Antwort auf eine Anfrage sein.

Von Interesse kann beispielsweise der Aufenthaltsort eines, insbesondere durch die Polizei gesuchten Fahrzeuges sein. Gemäß Anspruch 2 enthält dazu jede Kommunikationseinrichtung eine fahrzeugspezifische Kennung, die im Falle des Eintreffens eines Funktelegramms automatisch an das Funktelegramm angefügt und weitergesendet wird. Die Kennung des Fahrzeugs, von dem das Funktelegramm empfangen wurde, kann auch durch diese neue Kennung überschrieben werden.

Entsprechend einer in Anspruch 3 beschriebenen vorteilhaften Weiterbildung wird bei Vorliegen des Ergebnisses der Anfragen ein neues Funktelegramm, das dieses Ergebnis beinhaltet, generiert und verbreitet. Das Suchergebnis wird folglich nach einiger Zeit auf die gleiche Art und Weise wie die Anfrage an die anfragende Stelle, beispielsweise ein Polizeirevier, zurückgesandt. Es ist jedoch auch möglich, das Suchergebnis an einer anderen Stelle der Kommunikationskaskade abzuholen.

Die Verbreitungsgeschwindigkeit eines Funktelegramms bzw. die Zeit, die zwischen der Verbreitung einer Anfrage und dem Vorliegen einer Antwort vergeht, hängt ganz entscheidend von der Ausrüstungsdichte der Fahrzeuge mit der Kommunikationseinrichtung zum Empfangen und Absenden von Funktelegrammen ab. Bei einer Ausrüstungsdichte von etwa 0,1 % und einer Reichweite des Funktelegramms von ca. 100 m wird sich eine Informotion in ganz Deutschland in etwa 10 Stunden ausbreiten. Beträgt die Ausrüstungsdichte 10 %, verringert sich die Verbreitungszeit für Deutschland auf wenige Sekunden.

Ein gesuchtes Fahrzeug wird sich einem anderen Fahrzeug, das die Suchmeldung verbreitet, als das gesuchte Fahrzeug auch dann zu erkennen geben, wenn es abgestellt wurde. Dann läuft eine neue (stille) Meldung, wo das gesuchte Fahrzeug gefunden wurde, in gleicher Weise zurück bis zum Absender der Suchmeldung, insbesondere der Polizei, die dann gezielt das Fahrzeug ausfindig machen kann. Vorzugsweise ist dazu eine Sende- und Empfangsantenne in der Windschutzscheibe eingeschmolzen und als Retroreflektor ausgebildet. Der Retroreflektor antwortet auch dann, wenn die restlichen Baugruppen der Kommunikationsanlage nicht in Betrieb sind oder durch Manipulation stillgelegt wurden.

Belange des Datenschutzes lassen sich dadurch berücksichtigen, daß ein gesuchtes Fahrzeug sich nur dann zu erkennen gibt, wenn der anfragenden Stelle, insbesondere der Polizei, ein Schlüssel bekannt ist, den an sich nur der Fahrzeugbesitzer mitteilen kann, wobei dieser Schlüssel Bestandteil der Fahrzeugkennung ist.

Das beanspruchte Verfahren zeichnet sich insbesondere durch Schnelligkeit und Wirtschaftlichkeit aus. Eine besondere Infrastruktur ist nicht erforderlich, so daß Kommunikationskosten nicht anfallen.

Um dem Fahrzeugbesitzer einen Anreiz zu geben, die Kommunikationseinrichtung zu erwerben, sollte die Kommunikationseinrichtung gemäß Anspruch 4 neben Einrichtungen zum Empfangen und Absenden von Funktelegrammen auch eine Einrichtung zum Auswerten des Funktelegramms aufweisen. Dadurch dient das Fahrzeug nicht nur als passive Relaisstation, in der Informationen empfangen und weiterverbreitet werden. Zusätzlich ergibt sich die Möglichkeit, alle oder bestimmte Informationen, die das Funktelegramm beinhaltet, für eigene Zwecke zu nutzen.

Solche Informationen werden entsprechend Anspruch 5 bevorzugt optisch oder akustisch angezeigt. Dabei kann es sich beispielsweise um Informationnen über die Verkehrsdichte handeln. Fahrzeuge, die selbständig Staus ermitteln können, indem z.B. das Geschwindigkeitsprofil oder der Pannenblinker anderer Fahrzeuge ausgewertet wird, senden eine entsprechende Information in die Umgebung. Diese Information sowie die entsprechende Information über die Stauauflösung verbreiten sich dann nach dem oben beschriebenen Verfahren. Als Limitparameter kommen hier vorrangig örtliche Beschränkungen in Frage, so daß das Verbreitungsgebiet die Größe aufweist, in der zu erwarten ist, daß eine Stauinformation interessiert. Desweiteren können Fahrzeuge auch selbständig den Straßenzustand, insbesondere die Rutschfestigkeit ermitteln. Als Meßwerte können hierfür die Außentemperatur und der an den Antriebsrädern ermittelte Schlupf verwendet werden. Von praktischer Bedeutung ist darüber hinaus die Erkennung von freien oder gerade frei gewordenen Parkplätzen. Fahrzeuge können selbständig erkennen, wenn sie einen Parkplatz verlassen. Diese Tatsache und die Position des Parkplatzes kann über ein Funktelegramm verbreitet werden. Die Einrichtung zum Auswerten der Funktelegramme visualisiert interessierten Fahrern anderer Fahrzeuge diese Information. Fahrzeuge können desweiteren selbständig erkennen, wenn sie in einen Unfall verwickelt sind. Die Position des Unfalls, ggf. zusammen mit Einzelheiten, die ein Rettungsdienst interessiert, können über ein Funktelegramm automatisch verbreitet werden. Die Fahrer anderer Fahrzeuge können diese Information nutzen, um Folgeunfälle zu vermeiden. Fahrzeuge, die mit einer Kartennavigationseinrichtung ausgestattet sind, können selbständig Abweichungen zwischen dem gefahrenen Weg und den eingetragenen Straßen ermitteln. Das können entweder neu gebaute Straßen oder Änderungen durch Baustellen sein. Gelegentliche Fahrten über die Wiese können dadurch erkannt werden, daß sie sich nicht wiederholen. Die so gewonnenen Informationen über Kartenänderungen können bei Funktelegrommverbreitung mittels der Einrichtung zum Auswerten der Funktelegramme anderen Fahrzeugen und ortsfesten Zentralen und dergleichen übermittelt werden.

Anspruch 6 betrifft die Ermittlung der Eigenposition und die Unterstützung anderer Fahrzeuge in derselben Aufgabe. Fahrzeuge, die ihre relative Position zu anderen Fahrzeugen mit Hilfe der Funktelegramme bestimmen können, können ihre eigene absolute Position bestimmen, wenn sie absolute Positionsangaben von einem anderen Fahrzeug verwenden. Die auf diese Weise ermittelte absolute Position wird zu anderen Fahrzeugen übertragen, die daraus ihre eigene absolute Position ermitteln. Die Genauigkeit nimmt bei jedem Weiterkoppeln ab. Gelegentlich sind aber Fahrzeuge in der Reichweite des Funktelegramms, die eine absolute Position direkt durch Kartenkorrelation und / oder GPS ermitteln können, wodurch Fehler infolge des Weiterkoppeln korrigiert werden. In der Praxis wird sich für alle beteiligten Fahrzeuge eine akzeptable Genauigkeit ergeben, wenn eine Mindestdichte von Fahrzeugen mit absoluter Positionsbestimmung vorhanden ist. Um diese Dichte zu erhöhen, können auch, beispielsweise am Straßenrand montierte, Sendebaken verwendet werden. Derartige Sendebaken, die permanent ein Positionssignal aussenden, sind besonders vorteilhaft für Positionsbestimmungen, deren Höhenkoordinate wichtig ist, beispielsweise in Parkhäusern, einsetzbar.

Eine Kommunikationseinrichtung mit einer Einrichtung zum Auswerten von Funktelegrammen läßt sich gemäß Anspruch 7 bevorzugt für F!ottenmanagementaufgaben, insbesondere des ÖPNV (öffentlicher Personennahverkehr), von Speditionen und Mietwagenfirmen nutzen. Die Flottenmitglieder kommunizieren mit Zentralen und untereinander, ohne daß sie auf eine kostenträchtige Infrastruktur zur Informationsübermittlung angewiesen sind.

Bevorzugt basiert die Kommunikationseinrichtung entsprechend Anspruch 8 auf die Nutzung der DSRC-Frequenzen (dedicated short range communication) 5,8 GHz und / oder 64 GHz, wobei die Reichweite des Funktelegramms ca. 100 m beträgt und die Datenrate im Mbit/sec-Bereich liegt.

Die Erfindung wird nachfolgend anhand zweier figürlicher Darstellungen näher erläutert.

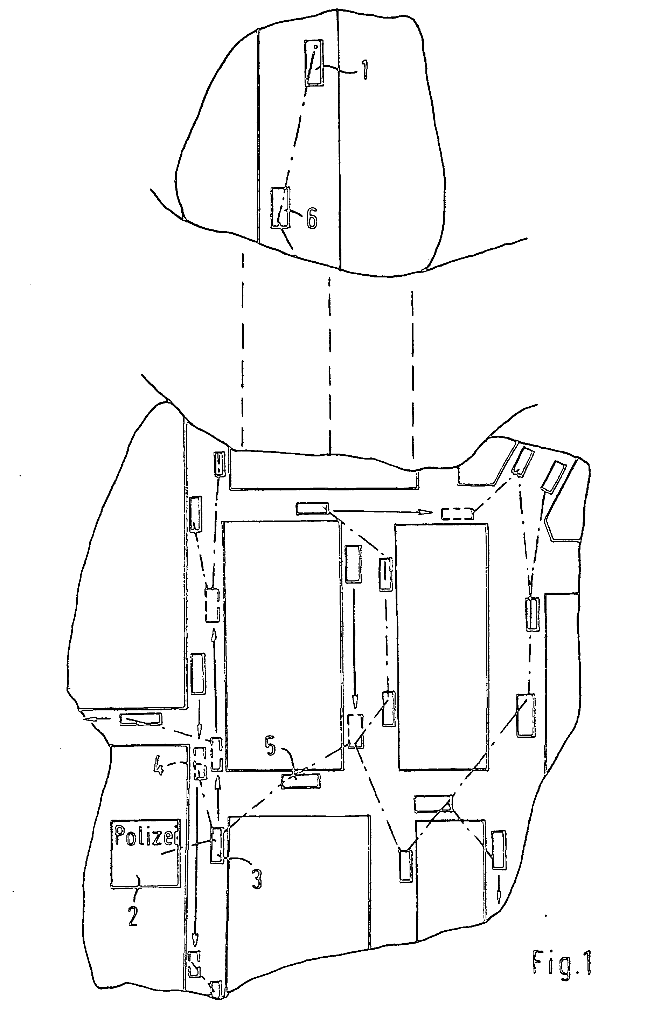

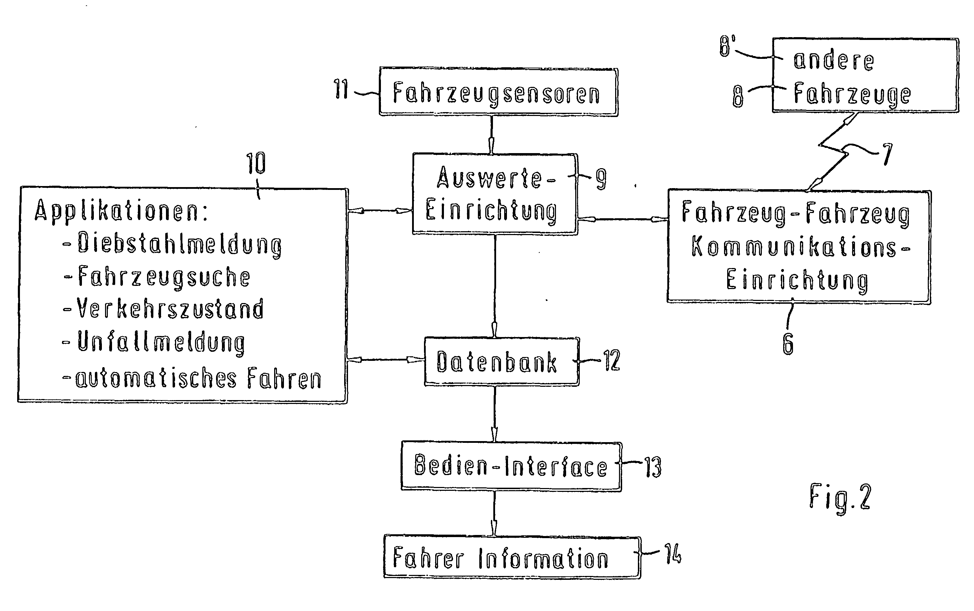

Es zeigen: Figur 1 eine symbolhafte Veranschaulichung des Verfahrens und Figur 2 eine schematische Darstellung der Komponenten zur Realisierung des Verfahren.

Figur 1 zeigt am Beispiel einer polizeilichen Suchmeldung das Auffinden eines Fahrzeuges 1 einer bestimmten Kennung mit Schlüsselangaben des Fahrzeugbesitzers. Erstmals ausgesandt wurde das Funktelegramm (Strich-Punkt-Darstellung), das die Anfrage und Limitparameter zum Beenden der Anfrage umfaßt, von einem Polizeirevier 2 zum Zeitpunkt 't₁. Ein zufällig vorbeifahrendes erstes Fahrzeug 3 ist der erste Empfänger dieses Funktelegramms. Unmittelbar danach gelangen ein zweites Fahrzeug 4 und ein drittes Fahrzeug 5 in die Reichweite des Funktelegramms, das nunmehr von dem ersten Fahrzeug 3 ausgesandt wird. Die drei Fahrzeuge 3, 4 und 5 geben das Funktelegramm mit der Suchanfrage an jedes in die Reichweite des Funktelegramms kommende Fahrzeug weiter, welches seinerseits auf die gleiche Weise für die weitere Verbreitung sorgt. Es ist ersichtlich, daß selbst bei geringer Reichweite des Funktelegramms und geringer Ausrüstungdichte der Gesamtzahl der Fahrzeuge mit einer zum Senden und Empfangen erforderlichen Kommunikationseinrichtung eine kaskadenartige Ausbreitung mit explosionsartiger Geschwindigkeit erfolgt. Bei einer Reichweite von ca. 100 m und einer Ausrüstungsdichte von etwa 10 % hat sich die Information innerhalb weniger Sekunden über das gesamte Territorium der Bundesrepublik Deutschland ausgebreitet. Das gesuchte Fahrzeug 1 wird folglich von einem Fahrzeug 6 zu einem Zeitpunkt t₂ angefunkt, wobei auch bei Fortsetzung der Fahrt durch das gesuchte Fahrzeug und gleichartigem Retourweg eine Eingrenzung auf ein relativ kleines Suchgebiet möglich ist. Auch wenn der Retourweg, d.h. die Übermittlung der Antwort von dem gesuchten Fahrtzeug 1 an das Polizeirevier 2 über eine andere Wegstrecke, die sich aus der Funkübertragung zwischen anderen Fahrzeugen zusammensetzt, besteht, kann sich wegen der sehr schnellen Durchmischung und Mehrfachkontaktierung nur eine Gesamtzeit zwischen dem Aussenden der Anfrage durch das Polizeirevier 2 und dem Empfang einer Antwort durch das Polizeirevier 2 von näherungsweise δt = 2 (t₂ - t₁) ergeben.

Figur 2 veranschaulicht das Zusammenwirken der wichtigsten Komponenten einer Fahrzeugausstattung zur Durchführung des Informationsverbreitungsverfahrens, welches anhand der Figur 1 beispielhaft beschrieben ist. Zentrale Baugruppe ist eine Kommunikationseinrichtung 6, die Funktelegramme 7 von anderen Fahrzeugen 8 empfängt und an andere Fahrzeuge 8' absendet. Die Kommunikationseinrichtung 6 wirkt mit einer Auswerteeinrichtung 9 zusammen. Diese Auswerteeinrichtung 9 verarbeitet je nach Applikation 10 Informationen, die die Kommunikationseinrichtung 6 von anderen Fahrzeugen 8 empfangen hat und Daten von Fahrzeugzensoren 11. Über eine Datenbank 12, die mit den Applikationen 10 zusammenwirkt, werden die Ausgangssignale der Auswerteeinrichtung 9 einem Bedien-Interface 13 zugeführt. Entsprechend der am Bedien-Interface 13 eingestellten Optionen erfolgt eine optische und / oder akustische Signalisierung 14 der ausgewerteten Informationen. Der Fahrer eines derartig ausgestatteten Fahrzeuges kann über das Bedien-Interface 13 Applikationen 10 auswählen, die mit Hilfe gleichartig ausgestatteter Fahrzeuge 8, 8' z.B. die Fahrzeugsuche bei Diebstahl erleichtern, den Verkehrszustand visualisieren, eine Unfollmeldung verbreiten oder das automatische Fahren unterstützen können.

Die Erfindung beschränkt sich nicht auf die vorstehend angegebenen Ausführungsbeispiele. Vielmehr ist eine Ausführung der Erfindung auch bei Verwendung grundsätzlich anders gearteter Baugruppen möglich. Insbesondere beschränkt sich die Erfindung nicht auf die Realisierung mit analogen Bauelementen, sondern ist auf vorteilhafte weise auch mittels integrierter Logik-Bauelemente realisierbar.

## Patentansprüche

1. Verfahren zur Weitergabe von Informationen zwischen beweglichen Körpern, insbesondere Fahrzeugen (3, 4,5,8 8'), wobei jeder bewegliche Körper eine Kommunikationseinrichtung (6) zum Empfangen und Absenden von Funktelegrammen (7) aufweist, wobei
• ein Funktelegramm (7) generiert wird, welches die Information enthält,
• mindestens einer der beweglichen Körper das Funktelegramm (7) empfängt und an jeden anderen beweglichen Körper, der in die Reichweite des Funktelegramms (7) gelangt, absendet und
• zur kaskadenartigen Ausbreitung der Information jeder andere bewegliche Körper, der das Funktelegramm (7) empfangen hat, dieses an jeden weiteren beweglichen Körper, der in die Reichweite des Funktelegramms (7) gelangt, absendet,
**dadurch gekennzeichnet, dass** das Funktelegramm Limitparameter, die eine Beendigung der Informationsweitergabe signalisieren, enthält, wobei der limit parameter eine vorgegebene Verbreitungs mit oder ein raumliches Verbreitungsgebiet, ist.

2. Verfahren nach Anspruch 1, **dadurch gekennzeichnet, dass** die Kommunikationseinrichtung (6) spezifische Daten, insbesondere eine Kennung, des beweglichen Körpers an das Funktelegramm (7) anfügt.

3. Verfahren nach Anspruch 3, **dadurch gekennzeichnet, dass** die Informationen Anfragen, insbesondere bezüglich des Aufenthaltsortes eines beweglichen Körpers einer bestimmten Kennung, umfassen, wobei das Ergebnis der Anfragen als neues Funktelegramm (7) verbreitet wird.

4. Kommunikationseinrichtung (6) für Fahrzeuge (3, 4, 5, 8, 8') zur Durchführung des Verfahrens nach einem der vorangehenden Ansprüche, **dadurch gekennzeichnet, dass** Einrichtungen zum Empfangen, Auswerten und Absenden von Funktelegrammen (7) vorgesehen sind, wobei die Einrichtung zum Absenden eingerichtet ist, ein empfangenes Funktelegramm an jeden anderen beweglichen Körper, der in die Reichweite des Funktelegramms gelangt, abzusenden und wobei die Kommunikationseinrichtung eingerichtet ist, die Informationsweitergabe entsprechend von Limitparametern im Funktelegram zu beenden, wobei der Limitparameter eine vorgegebene Verbreitungs mit oder ein räumliches Vebreitungsgebiet ist.

5. Kommunikationseinrichtung (6) nach Anspruch 4, **dadurch gekennzeichnet, dass** die Einrichtung (9) zum Auswerten der Funktelegramme (7) Mittel zur optischen und / oder akustischen Signalisierung (14) von Informationen über
• die Verkehrsdichte, insbesondere über Staubildung und - auflösung und/oder
• den Straßenzustand, insbesondere Rutschfestigkeit und / oder
• freie Parkplätze und / oder
• Verkehrsunfälle, insbesondere zur Weiterleitung an Rettungsdienste und zur Vermeidung von Folgeunfällen und / oder
• das Straßennetz, insbesondere hinsichtlich neuer Straßen oder Baustellen
umfasst.

6. Kommunikationseinrichtung (6) nach Anspruch 4 oder 5, **dadurch gekennzeichnet, dass** die Einrichtung (9) zum Auswerten der Funktelegramme (7) Mittel zur optischen und / oder akustischen Signalisierung (14) von Informationen über den eigenen Aufenthaltsort umfasst, wobei mindestens ein Bezugspunkt, insbesondere die Koordinaten einer Sendebake oder die durch Kartenkorrelation, GPS usw. ermittelten Aufenthaltsorte anderer Fahrzeuge (3, 4, 5, 8, 8'), zugrundegelegt ist.

7. Kommunikationseinrichtung (6) nach einem der Ansprüche 4 bis 6, **dadurch gekennzeichnet, dass** die Einrichtung (9) zum Auswerten von Funktelegrammen (7) bei Flottenmitgliedern, insbesondere des öffentlichen Personennahverkehrs (ÖPNV), von Speditionen und Mietwagenfirmen, Mittel zur optischen und / oder akustischen Signalisierung (14) von Informationen über Aufenthaltsort, Status, Routenplanung usw. anderer Flottenmitglieder umfasst.

8. Kommunikationseinrichtung (6) nach einem der Ansprüche 4 bis 7, **dadurch gekennzeichnet, dass** die Funktelegramme (7) für die DSRC - Frequenzen (dedicated short range communication) 5,8 GHz und / oder 64 GHz ausgelegt sind, wobei die Reichweite des Funktelegramms (7) ca. 100 m beträgt und die Datenrate im Mbit/sec-Bereich liegt.

## Claims

1. Method for passing on information between moving bodies, in particular vehicles (3, 4, 5, 8, 8'), each moving body having a communication device (6) for receiving and transmitting radio telegrams (7), wherein
• a radio telegram (7) is generated containing the information,
• at least one of the moving bodies receives the radio telegram (7) and transmits it to every other moving body which arrives within the range of the radio telegram (7) and
• for cascade-type propagation of the information, every other moving body which has received the radio telegram (7) transmits it to every further moving body which arrives within the range of the radio telegram (7),
**characterised in that** the radio telegram contains limit parameters which signal termination of the passing on of information, the limit parameter being a preset dissemination time or a spatial dissemination area.

2. Method according to claim 1, **characterised in that** the communication device (6) adds specific data, in particular an identifier, of the moving body to the radio telegram (7).

3. Method according to claim 3, **characterised in that** the items of information comprise requests, in particular relating to the whereabouts of a moving body of a specific identifier, the result of the requests being disseminated as a new radio telegram (7).

4. Communication device (6) for vehicles (3, 4, 5, 8, 8') for executing the method according to one of the preceding claims, **characterised in that** devices for receiving, evaluating and transmitting radio telegrams (7) are provided, the device for transmitting being set up to transmit a received radio telegram to every other moving body which arrives within the range of the radio telegram and the communication device being set up to terminate the passing on of information corresponding to limit parameters in the radio telegram, the limit parameter being a preset dissemination time or a spatial dissemination area.

5. Communication device (6) according to claim 4, **characterised in that** the device (9) for evaluating the radio telegrams (7) comprises means for optical and/or acoustic signalling (14) of items of information on
• the traffic density, in particular on the buildup and clearing of congestion and/or
• the state of the road, in particular whether it is non-skid and/or
• available parking spaces and/or
• traffic accidents, in particular for forwarding to rescue services and for avoiding subsequent accidents and/or
• the road network, in particular in respect of new roads or road-works.

6. Communication device (6) according to claim 4 or 5, **characterised in that** the device (9) for evaluating the radio telegrams (7) comprises means for optical and/or acoustic signalling (14) of items of information on the vehicle's own whereabouts, wherein at least one reference point, in particular the coordinates of a transmitting beacon or the whereabouts of other vehicles (3, 4, 5, 8, 8') assessed by map correlation, GPS, etc. is used as a basis.

7. Communication device (6) according to one of claims 4 to 6, **characterised in that** the device (9) for evaluating radio telegrams (7) among members of a fleet, in particular of local public transport, haulage companies and car rental firms, comprises means for optical and/or acoustic signalling (14) of items of information on the whereabouts, status, route-planning, etc. of other fleet members.

8. Communication device (6) according to one of claims 4 to 7, **characterised in that** the radio telegrams (7) are configured for the DSRC frequencies (dedicated short range communication) 5.8 GHz and/or 64 GHz, the range of the radio telegram (7) being approximately 100 m and the data rate in the Mbit/sec range.

## Revendications

1. Procédé pour la transmission d'informations entre des corps mobiles, en particulier des véhicules (3, 4, 5, 8, 8'), chaque corps mobile présentant un appareil de communication (6) pour la réception et l'émission de radiotélégrammes (7), moyennant quoi
• un radiotélégramme (7) est généré, lequel contient une information,
• au moins l'un des corps mobiles reçoit le radiotélégramme (7) et l'envoie à tout autre corps mobile qui arrive dans la zone de couverture du radiotélégramme (7) et
• pour la diffusion en cascade de l'information, tout autre corps mobile ayant reçu le radiotélégramme (7) l'envoie à tout autre corps mobile qui arrive dans la zone de couverture du radiotélégramme (7),
**caractérisé en ce que** le radiotélégramme contient des paramètres limites qui signalent un achèvement de la transmission d'informations, le paramètre limite étant une diffusion prédéfinie ou une zone de diffusion dans l'espace.

2. Procédé selon la revendication 1, **caractérisé en ce que** l'appareil de communication (6) joint des données spécifiques, en particulier un code, du corps mobile au radiotélégramme. (7).

3. Procédé selon la revendication 3, **caractérisé en ce que** les informations comprennent des demandes, en particulier concernant le lieu de séjour d'un corps mobile d'un code défini, le résultat des demandes étant diffusé sous la forme d'un nouveau radiotélégramme (7).

4. Appareil de communication (6) pour des véhicules (3, 4, 5, 8, 8') pour la mise en oeuvre du procédé selon l'une quelconque des revendications précédentes, **caractérisé en ce que** des appareils pour la réception, l'analyse et l'envoi de radiotélégrammes (7) sont prévus, l'appareil pour l'émission étant aménagé pour envoyer un radiotélégramme reçu à tout autre corps mobile qui arrive dans la zone de couverture du radiotélégramme et l'appareil de communication étant aménagé pour terminer la transmission d'information en fonction des paramètres limites dans le radiotélégramme, le paramètre limite étant un temps de diffusion prédéfini ou une zone de diffusion dans l'espace.

5. Appareil de communication (6) selon la revendication 4, **caractérisé en ce que** l'appareil (9) pour l'analyse des radiotélégrammes (7) comprend des moyens pour la signalisation (14) visuelle et/ou sonore d'informations concernant
• la densité du trafic, en particulier la formation et la résolution de bouchons et/ou
• l'état des routes, en particulier l'état glissant et/ou
• des parkings libres et/ou
• des accidents de la circulation, en particulier pour la transmission à des services de secours et pour éviter des accidents consécutifs et/ou
• le réseau routier, en particulier en ce qui concerne les nouvelles routes ou les nouveaux chantiers.

6. Appareil de communication (6) selon la revendication 4 ou 5, **caractérisé en ce que** l'appareil (9) pour l'analyse des radiotélégrammes (7) comprend des moyens pour la signalisation (14) visuelle et/ou sonore d'informations concernant le lieu de séjour propre, au moins un point de référence, en particulier les coordonnés d'une balise émettrice ou les lieux de séjour déterminés par corrélation de cartes, GPS, etc., d'autres véhicules (3, 4, 5, 8, 8') étant pris pour base.

7. Appareil de communication (6) selon l'une quelconque des revendications 4 à 6, **caractérisé en ce que** l'appareil (9) pour l'analyse de radiotélégrammes (7) utilisés par les adhérents de parcs, en particulier du transport public de personnes sur courte distance (ÖPNV), des maisons de transport et de société de location de voitures, comprend des moyens pour la signalisation (14) visuelle et/ou sonore et d'informations concernant le lieu de séjour, l'état, la planification des routes, etc., d'autres membres de parcs.

8. Appareil de communication (6) selon l'une quelconque des revendications 4 à 7, **caractérisé en ce que** les radiotélégrammes (7) sont conçus pour les fréquences DSRC (dedicated short range communication) 5,8 GHz et/ou 64 GHz, la zone de couverture du radiotélégramme (7) étant d'environ 100 m et le débit binaire se situant dans la plage Mbit/sec.
